# EUROPEAN PATENT SPECIFICATION

(11) **EP 3 349 054 B1**
(45) Date of publication and mention of the grant of the patent: **13.11.2019**
(21) Application number: 15903307.5
(22) Date of filing: 18.09.2015
(51) Int. Cl.: G02C 5/00, B29D 12/02, B32B 37/06

(54) **METHOD FOR FABRICATING SEAMLESS SPECTACLE FRAME HAVING METAL MATERIAL EMBEDDED UNDER CELLULOSE ACETATE SHEET**
VERFAHREN ZUR HERSTELLUNG NAHTLOSER BRILLENFASSUNGEN MIT METALLMATERIALEINBETTUNG UNTER EINER CELLULOSEACETATFOLIE
PROCÉDÉ DE FABRICATION D'UNE MONTURE DE LUNETTES SANS SOUDURE AYANT UN MATÉRIAU MÉTALLIQUE INCORPORÉ SOUS UNE FEUILLE D'ACÉTATE DE CELLULOSE

(30) Priority: 07.09.2015 CN 201510559031
(43) Date of publication of application: 18.07.2018
(73) Proprietor: Wang, Daomin, Shenzhen, Guangdong 518052 (CN)
(72) Inventor: Wang, Daomin, Shenzhen, Guangdong 518052 (CN)
(74) Representative: Spittle, Mark Charles
(86) International application number: PCT/CN2015/000649
(87) International publication number: WO 2017/041200

(56) References cited:
- CN-A- 101 284 424
- CN-A- 102 478 716
- CN-A- 103 645 567
- CN-A- 104 407 447
- JP-A- 2002 365 595

## Description

### FIELD OF THE INVENTION

The present invention relates to the technical field of spectacle frame fabrication, and more particularly, to a method for fabricating a seamless spectacle frame made of a cellulose acetate sheet embedded with a metal material.

### BACKGROUND OF THE INVENTION

Common spectacle frames in the market comprise metal spectacle frames and plastic spectacle frames. The metal spectacle frames are rigid and durable, but poor in comfort. Tail ends of legs of the metal spectacle frame are usually sleeved with plastic to protect ear bones. Thus, the metal spectacle frame is heavier, and is poorer in corrosion resistance. The plastic spectacle frame is light-weight and corrosion-resistant, but is poorer in reliability.

In order to endow a spectacle frame with the advantages of a plastic material and a metal material simultaneously, during a process of fabricating the spectacle frame, a plastic spectacle frame is fabricated first, and then, the metal material is inlaid on the surface of the plastic frame to improve the strength of the spectacle frame. However, this spectacle frame is still poor in corrosion resistance. The document CN-A-104407447 discloses a method for fabricating a seamless spectacle frame made of a cellulose acetate sheet wherein a groove is made in a cellulose acetate board and a metal inlay is put in the groove, further including baking steps.

In the prior art, how to embed a metal material in a plastic material is a technical problem which needs to be solved urgently during fabricating a spectacle frame with excellent performance.

### SUMMARY OF THE INVENTION

An object of the present invention is to provide a method for fabricating a seamless spectacle frame made of a cellulose acetate sheet embedded with a metal material. In the method, the metal material can be embedded in the cellulose acetate sheet, so that the strength and the corrosion resistance of the spectacle frame are improved.

The solution according to claim 1 is a method for fabricating a seamless spectacle frame made of a cellulose acetate sheet embedded with a metal material comprises the following steps: S10, providing a cellulose acetate sheet main material, and punching four positioning holes in the main material; S20, cutting the main material by a CNC engraving and cutting machine; S30, providing an auxiliary material for the cellulose acetate sheet, and cutting the auxiliary material by the CNC engraving and cutting machine; S40, splicing the main material and the auxiliary material, and wrapping the spliced main and auxiliary materials with a plastic sheet for a period of time; S50, removing the plastic sheet, and placing the spliced main and auxiliary materials in an oven for baking; S60, placing the spliced main and auxiliary materials in the CNC engraving and cutting machine for cutting, so as to form inner rings and an outer ring, as well as a groove; S70, placing the cut main and auxiliary materials in the oven for preheating; S80, placing a metal component in the groove of the spliced main and auxiliary materials, and baking the metal component and the main and auxiliary materials in the oven; S90, pressing the baked metal component and main and auxiliary materials in a die of a hydraulic press to form a shape of a spectacle rim; and S100, mounting fittings on the formed spectacle rim.

Preferably, in step S40, the main and auxiliary materials are wrapped with the plastic sheet for 10-14 hours.

Preferably, in step S50, the temperature of the oven is 45-60 °C, and the baking time of the main and auxiliary materials in the oven is 60-90 hours.

Preferably, in step S70, the temperature of the oven is 220-280 °C, and the heating time is 0.5-1 minute.

Preferably, in step S80, the temperature of the oven is 220-280 °C, and the heating time is 1-1.5 minutes.

In the method for fabricating the seamless spectacle frame made of the cellulose acetate sheet embedded with the metal material, provided by the present invention, the molecular structure of the cellulose acetate sheet is expanded through heating according to the principle of heat expansion and cold shrinkage; and then a high pressure is applied to integrate the molecular structures of the materials, so that the metal material is embedded in the cellulose acetate sheet in a seamless connection manner. Thus, the strength and the corrosion resistance of the fabricated seamless spectacle frame made of the cellulose acetate sheet embedded with the metal material are improved.

### BRIEF DESCRIPTION OF THE DRAWINGS

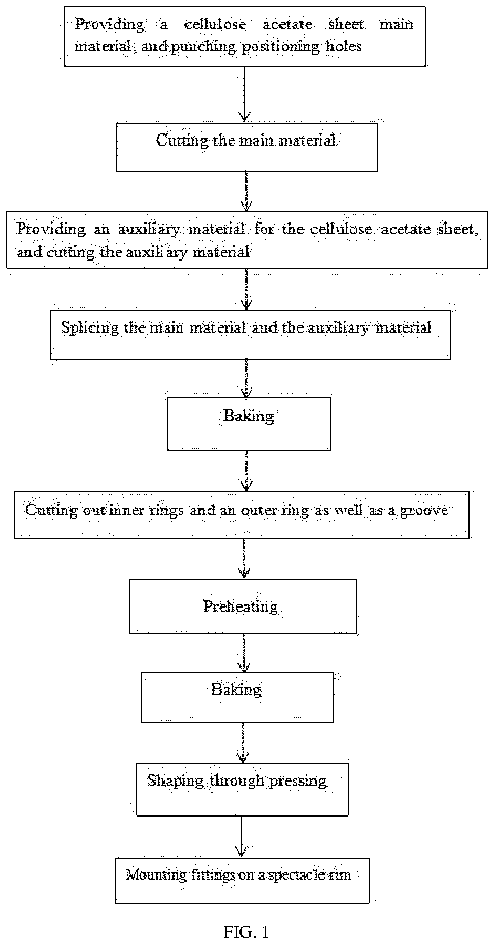

Fig. 1 is a schematic flow chart of a method for fabricating a seamless spectacle frame made of a cellulose acetate sheet embedded with a metal material.

### DETAILED DESCRIPTION OF THE EMBODIMENTS

The present invention will be further described in detail below in combination with the accompanying drawings and the specific embodiments.

Referring to Fig. 1, Fig. 1 shows a method for fabricating a seamless spectacle frame made of a cellulose acetate sheet embedded with a metal material. The method comprises the following steps.

In step S10, a cellulose acetate sheet main material is provided, and four positioning holes are punched in the main material.

In step S20, the main material is cut by a CNC engraving and cutting machine.

In step S30, an auxiliary material for the cellulose acetate sheet is provided, and the auxiliary material is cut by the CNC engraving and cutting machine.

In step S40, the main material and the auxiliary material are spliced, and the spliced main and auxiliary materials are wrapped with a plastic sheet for 10-14 hours.

In step S50, the plastic sheet is removed, and the spliced main and auxiliary materials are placed in an oven for baking. The temperature of the oven is 45-60 °C, and the baking time of the main and auxiliary materials in the oven is 60-90 hours.

In step S60, the spliced main and auxiliary materials are placed in the CNC engraving and cutting machine for cutting, so as to form inner rings and an outer ring, as well as a groove.

In step S70, the cut main and auxiliary materials are placed in the oven for preheating. The temperature of the oven is 220-280 °C, and the heating time is 0.5-1 minute.

In step S80, a metal component is placed in the groove of the spliced main and auxiliary materials; and the metal component and the main and auxiliary materials are baked in the oven. The temperature of the oven is 220-280 °C, and the heating time is 1-1.5 minutes.

In step S90, the baked metal component and main and auxiliary materials are pressed in a die of a hydraulic press to form a shape of a spectacle rim.

In step S100, fittings are mounted on the formed spectacle rim.

In the method for fabricating the seamless spectacle frame made of the cellulose acetate sheet embedded with the metal material, the molecular structure of the cellulose acetate sheet is expanded through heating according to the principle of heat expansion and cold shrinkage; and then a high pressure is applied to integrate the molecular structures of the materials, so that the metal material is embedded in the cellulose acetate sheet in a seamless connection manner. Thus, the strength and the corrosion resistance of the fabricated seamless spectacle frame made of the cellulose acetate sheet embedded with the metal material are improved.

The foregoing is a further detailed description of the present invention in combination with the specific embodiments, and it cannot be considered that the specific implementations of the present invention are limited to these descriptions. For those skilled in the art, some simple deductions or replacements can be made without departing from the concept of the present invention as defined in the appended claims.

## Claims

1. A method for fabricating a seamless spectacle frame made of a cellulose acetate sheet embedded with a metal material, the method comprising the following steps:
S10: providing a cellulose acetate sheet main material, and punching four positioning holes in the main material;
S20: cutting the main material by a CNC engraving and cutting machine;
S30: providing an auxiliary material for the cellulose acetate sheet, and cutting the auxiliary material by the CNC engraving and cutting machine;
S40: splicing the main material and the auxiliary material, and wrapping the spliced main and auxiliary materials with a plastic sheet for a period of time;
S50: removing the plastic sheet, and placing the spliced main and auxiliary materials in an oven for baking;
S60: placing the spliced main and auxiliary materials in the CNC engraving and cutting machine for cutting, so as to form inner rings and an outer ring, as well as a groove;
S70: placing the cut main and auxiliary materials in the oven for preheating;
S80: placing a metal component in the groove of the spliced main and auxiliary materials, and baking the metal component and the main and auxiliary materials in the oven;
S90: pressing the baked metal component and main and auxiliary materials in a die of a hydraulic press to form a shape of a spectacle rim; and
S100: mounting fittings on the formed spectacle rim.

2. The method for fabricating the seamless spectacle frame made of the cellulose acetate sheet embedded with the metal material of claim 1, wherein in step S40, the spliced main and auxiliary materials are wrapped with the plastic sheet for 10-14 hours.

3. The method for fabricating the seamless spectacle frame made of the cellulose acetate sheet embedded with the metal material of claim 2, wherein in step S50, the temperature of the oven is 45-60 °C, and the baking time of the main and auxiliary materials in the oven is 60-90 hours.

4. The method for fabricating the seamless spectacle frame made of the cellulose acetate sheet embedded with the metal material of claim 3, wherein in step S70, the temperature of the oven is 220-280 °C, and the heating time is 0.5-1 minute.

5. The method for fabricating the seamless spectacle frame made of the cellulose acetate sheet embedded with the metal material of claim 4, wherein in step S80, the temperature of the oven is 220-280 °C, and the heating time is 1-1.5 minutes.

## Patentansprüche

1. Verfahren zum Anfertigen eines nahtlosen Brillengestells, hergestellt aus einer Celluloseacetatfolie, die mit einem Metallmaterial eingebettet ist, wobei das Verfahren die folgenden Schritte umfasst:
S10: Bereitstellen eines Hauptmaterials für Celluloseacetatfolie und Ausstanzen von vier Positionierungslöchern in dem Hauptmaterial;
S20: Schneiden des Hauptmaterials durch eine CNC-Gravier- und Schneidemaschine;
S30: Bereitstellen eines Hilfsmaterials für die Celluloseacetatfolie und Schneiden des Hilfsmaterials durch die CNC-Gravier- und Schneidemaschine;
S40: Spleißen des Hauptmaterials und des Hilfsmaterials und Umwickeln des gespleißten Hauptmaterials und des Hilfsmaterials mit einer Kunststofffolie über einen Zeitraum;
S50: Entfernen der Kunststofffolie und Platzieren des gespleißten Haupt- und des Hilfsmaterials in einen Ofen zum Einbrennen;
S60: Platzieren des gespleißten Haupt- und des Hilfsmaterials in der CNC-Gravier- und Schneidemaschine zum Schneiden, um Innenringe und einen Außenring sowie eine Rille auszubilden;
S70: Platzieren des geschnittenen Haupt- und des Hilfsmaterials in dem Ofen zum Anwärmen;
S80: Platzieren einer Metallkomponente in der Rille des gespleißten Haupt- und des Hilfsmaterials und Einbrennen der Metallkomponente und des Haupt- und des Hilfsmaterials in dem Ofen;
S90: Pressen der eingebrannten Metallkomponente und des Haupt- und des Hilfsmaterials in einer Matrize einer hydraulischen Presse, um eine Form eines Brillenrands auszubilden; und
S100: Befestigen von Verschraubungen auf dem ausgebildeten Brillenrand.

2. Verfahren zum Anfertigen des nahtlosen Brillengestells, hergestellt aus der Celluloseacetatfolie, die mit dem Metallmaterial eingebettet ist, nach Anspruch 1, wobei in Schritt S40 das gespleißte Haupt- und das Hilfsmaterial 10-14 Stunden lang mit der Kunststofffolie umwickelt werden.

3. Verfahren zum Anfertigen des nahtlosen Brillengestells, hergestellt aus der Celluloseacetatfolie, die mit dem Metallmaterial eingebettet ist, nach Anspruch 2, wobei in Schritt S50 die Temperatur des Ofens 45-60 °C beträgt und die Einbrennzeit des Haupt- und des Hilfsmaterials in dem Ofen 60-90 Stunden beträgt.

4. Verfahren zum Anfertigen des nahtlosen Brillengestells, hergestellt aus der Celluloseacetatfolie, die mit dem Metallmaterial eingebettet ist, nach Anspruch 3, wobei in Schritt S70 die Temperatur des Ofens 220-280 °C und die Wärmzeit 0,5-1 Minuten beträgt.

5. Verfahren zum Anfertigen des nahtlosen Brillengestells, hergestellt aus der Celluloseacetatfolie, die mit dem Metallmaterial eingebettet ist, nach Anspruch 4, wobei in Schritt S80 die Temperatur des Ofens 220-280 °C und die Wärmzeit 1-1,5 Minuten beträgt.

## Revendications

1. Procédé de fabrication d'une monture de lunettes sans soudure constituée d'une feuille d'acétate de cellulose incorporée dans un matériau métallique, le procédé consistant à :
S10 : fournir un matériau principal en feuille d'acétate de cellulose et perforer quatre trous de positionnement dans le matériau principal ;
S20 : découper le matériau principal à l'aide d'une machine de gravure et de découpe CNC ;
S30 : fournir un matériau auxiliaire pour la feuille d'acétate de cellulose et découper le matériau auxiliaire à l'aide d'une machine de gravure et de découpe CNC ;
S40 : épisser le matériau principal et le matériau auxiliaire, et envelopper les matériaux principaux et auxiliaires épissés d'une feuille de plastique pendant une certaine durée ;
S50 : retirer la feuille de plastique et placer les matériaux principaux et auxiliaires épissées dans un four pour cuisson ;
S60 : placer les matériaux principaux et auxiliaires épissés dans la machine de gravure et de découpe CNC pour découpage, de manière à former des bagues intérieures et une bague extérieure, ainsi qu'une rainure ;
S70 : placer les matériaux principaux et auxiliaires découpés dans le four pour préchauffage ;
S80 : placer un composant métallique dans la rainure des matériaux principaux et auxiliaires épissés, et cuire le composant métallique et les matériaux principaux et auxiliaires dans le four ;
S90 : presser le composant métallique cuit et les matériaux principaux et auxiliaires dans une matrice d'une presse hydraulique pour former une forme de cercle de lunettes ; et
S100 : monter des pièces sur le cercle de lunettes formé.

2. Procédé de fabrication de la monture de lunettes sans soudure constituée de la feuille d'acétate de cellulose incorporée dans le matériau métallique selon la revendication 1, dans lequel à l'étape S40, les matières principales et auxiliaires épissées sont enveloppées de la feuille de plastique pendant 10 à 14 heures.

3. Procédé de fabrication de la monture de lunettes sans soudure constituée de la feuille d'acétate de cellulose incorporée dans le matériau métallique selon la revendication 2, dans lequel à l'étape S50, la température du four est de 45 à 60 °C et le temps de cuisson des matériaux principaux et auxiliaires dans le four est de 60 à 90 heures.

4. Procédé de fabrication de la monture de lunettes sans soudure constituée de la feuille d'acétate de cellulose incorporée dans le matériau métallique selon la revendication 3, dans lequel à l'étape S70, la température du four est de 220 à 280 °C et la durée de chauffage est de 0,5 à 1 minute.

5. Procédé de fabrication de la monture de lunettes sans soudure constituée de la feuille d'acétate de cellulose incorporée dans le matériau métallique selon la revendication 4, dans lequel à l'étape S80, la température du four est de 220 à 280 °C et la durée de chauffage est de 1 à 1,5 minute.
